# EUROPÄISCHE PATENTANMELDUNG

(11) **EP 1 016 797 A2**
(43) Veröffentlichungstag der Anmeldung: **05.07.2000**
(21) Anmeldenummer: 99811146.2
(22) Anmeldetag: 13.12.1999
(51) Int. Cl.: F16B 37/08

(54) **Befestigungselement für Gewindebolzen**

(30) Priorität: 29.12.1998 DE 19860628
(71) Anmelder: HILTI Aktiengesellschaft, 9494 Schaan (LI)
(72) Erfinder: Hermann, Fritz, 86899 Landsberg (DE); Sedlmeier, Andreas, 86932 Ummendorf (DE)
(74) Vertreter: Wildi, Roland

(57) **Zusammenfassung**

Ein Befestigungselement für Gewindebolzen, insbesondere eine Gewindemutter (1), weist einen vorzugsweise mit einem Aussensechskant versehenen Körper (2) auf, der in zwei, gelenkig miteinander verbundene Hälften (3, 4) geteilt ist. Jede der Hälften (3, 4) besitzt eine im wesentlichen halbkreisförmige Ausnehmung (5, 6), die wenigstens an ihrem Grund einen oder mehrere Gewindegänge (7) aufweist. Die gelenkige Verbindung der beiden Hälften ist von wenigstens einem plastischen Gelenk (9) gebildet. Von wenigstens einer der Flachseiten (12) an den axialen Enden des Körpers (2) ragt ein im wesentlichen ringförmiger Kragen (10, 11) ab.

## Beschreibung

Die Erfindung betrifft ein Befestigungselement für Gewindebolzen, insbesondere eine Gewindemutter, gemäss dem Oberbegriff des Patentanspruchs 1.

Zur Festlegung von Bauteilen an einer Oberfläche, zur Verbindung von Bauteilen u.v.a.m. kommen Schrauben oder Gewindestangen zum Einsatz, die durch Bohrungen in die Bauteile gesteckt werden oder beispielsweise von einem Bauteil oder dem Untergrund abragen. Zur Festlegung eines weiteren Bauteils an der Gewindestange werden Befestigungselemente, beispielsweise Gewindemuttern, eingesetzt, die mit einer Innengewindebohrung versehen sind und auf die Gewindestange aufgeschraubt werden. Das Aufbringen von Gewindemuttern auf längere Gewindestangen kann je nach Länge der Stangen mit einem erheblichen Zeitaufwand verbunden sein. Ausserdem kommt es vielfach vor, dass das Gewinde am Ende solcher Gewindestangen beschädigt ist, so dass sich eine Gewindemutter ohne Nachbearbeitung des Gewindes nicht aufdrehen lässt.

Für solche Zwecke und für Anwendungen, bei denen das Gewinde nicht bis zum Ende der Gewindestange geführt ist oder das Ende der Gewindestange mit einem Bund versehen ist, sind mehrteilige Gewindemuttern bekannt, welche radial aufsetzbar und unter radialem Zusammenfügen der einzelnen Teile fixierbar sind. Eine derartige, mehrteilige Gewindemutter ist beispielsweise aus der DE-A-26 28 508 bekannt und besteht aus zwei im wesentlichen U-förmigen Scheiben, die an ihren einen, aufeinander liegenden Schenkeln mit einem Gelenkbolzen gelenkig miteinander verbunden sind. Die U-förmigen Ausnehmungen der Scheiben weisen am Grund mehrere Gewindegänge auf. Duch Zusammenschwenken der beiden U-förmigen Scheiben sind die der gelenkigen Verbindung gegenüberliegenden Schenkel zur Überlappung bringbar. Rastmittel an den einander zugekehrten Flachseiten der überlappenden Schenkel sorgen für den Zusammenhalt der Scheiben und für die erforderliche Vorspannung der Gewindemutter. Während derartige bekannte, mehrteilige Gewindemuttern eine einfache Schnellmontage an der gewünschten Position entlang der Längserstreckung einer Gewindestange ermöglichen und im zusammengeschwenkten und verrasteten Zustand ausreichende Halteeigenschaften aufweisen, ist ihre Montage an der Gewindestange immer noch relativ umständlich. Ausserdem sind sie in der Herstellung und im Zusammenbau relativ aufwendig und teuer.

Aufgabe der vorliegenden Erfindung ist es daher, ein Befestigungselement für Gewindebolzen, insbesondere eine Gewindemutter, zu schaffen, die einfach und schnell an einem Gewindebolzen zu montieren ist und die geforderten Haltewerte erreicht. Das Befestigungselement soll einfach und kostengünstig in der Herstellung sein.

Die Lösung dieser Aufgaben besteht in einem Befestigungselement, insbesondere in einer Gewindemutter, mit den im kennzeichnenden Abschnitt des Patentanspruchs 1 angeführten Merkmalen. Indem das Befestigungselement für Gewindebolzen, insbesondere eine Gewindemutter, zwei Körperhälften aufweist, die über wenigstens ein plastisches Gelenk miteinander verbunden sind, können gesonderte Verriegelungselemente, Rastelemente oder dergleichen entfallen. Die Sicherung der beispielsweise mit einer Zange zusammengepressten Körperhälften gegen ein unbeabsichtigtes Lösen bei Belastung erfolgt über einen im wesentlichen ringförmigen Kragen, der an wenigstens einer Flachseite am axialen Ende des Körpers abragt. Der Kragen dringt in eine Öffnung am festgeschraubten Bauteil bzw. am Untergrund und verhindert, dass sich das Befestigungselement bei Belastung aufweitet und die Gewindegänge des Aussengewindes am Gewindebolzen und in der kreisförmig zusammengefügten Ausnehmung ausser Eingriff kommen.

In einer vorteilhaften Variante der Erfindung ist der Körper einstückig ausgebildet und entlang eines Durchmessers geschlitzt. Der Schlitz ist dabei derart angebracht, dass der Körper auf einer radialen Seite vollständig und auf der gegenüberliegenden Seite bis auf einen dünnen, axial verlaufenden Materialsteg durchtrennt ist. Der verbleibende, dünne, axiale Materialsteg bildet das plastische Gelenk. Die einstückige Ausbildung des Befestigungselements ist besonders vorteilhaft. Die Gewindemutter kann zunächst auf herkömmliche Art hergestellt werden. Danach wird sie entlang eines Durchmessers geschlitzt. Der Schlitz- bzw. Schneide- oder Sägevorgang erfolgt in einem Schritt, indem das Schlitzwerkzeug mit axial ausgerichteter Klinge radial zugestellt wird. Dabei wird eine Seite vollständig und die gegenüberliegende Seite des Körpers bis auf einen dünnen, axial verlaufenden Materialsteg durchtrennt, der bereits das plastische Gelenk bildet.

Aus Festigkeitsgründen erweist sich für den nach der Schlitzerstellung verbleibenden dünnen Materialsteg eine radiale Mindestwandstärke von Vorteil, die etwa 0,3 mm bis etwa 3 mm beträgt. Bei diesen Wandstärken im plastischen Gelenk bleibt das Befestigungselement beispielsweise mit einer Zange zusammenpressbar. Dabei ist das plastische Gelenk fest genug, um nicht unbeabsichtigt auseinanderzubrechen.

In einer alternativen Ausführungsvariante der Erfindung weist das Befestigungselement ebenfalls einen einstückig ausgebildeten Körper auf, der entlang eines Durchmessers geschlitzt ist. Der Schlitz verläuft in axialer Richtung und ist derart angebracht, dass an einem axialen Ende des Körpers einander gegenüberliegende, radial verlaufende Materialstege verbleiben, die auf jeder Seite der Ausnehmung ein plastisches Gelenk bilden. Auch bei dieser vorteilhaften Variante des Befestigungselements kann beispielsweise eine Gewindemutter zunächst auf herkömmliche Weise gefertigt werden. Danach wird die Gewindemutter mit einem axial ausgerichteten, vorzugsweise einen Durchmesser der Gewindemutter überragenden Schlitzwerkzeug geschlitzt, indem das Werkzeug in axialer Richtung zugestellt wird. Dabei werden die einander gegenüberliegenden Seitenwände der Gewindemutter vollständig durchtrennt. Die Schlitze in den Seitenwänden werden axial soweit geführt, bis an einem Ende der Gewindemutter zu beiden Seiten der Ausnehmung je ein dünner Materialsteg verbleibt. Die zwei Materialstege verlaufen in radialer Richtung und liegen auf einem gemeinsamen Durchmesser der Gewindemutter. Die beiden plastischen Gelenke bieten den Vorteil, dass auch bei dem Bruch eines der Gelenke die Hälften des Körpers immer noch über das zweite Gelenk verbunden sind. Diese Variante des Befestigungselements eignet sich insbesondere für eine Schnellmontage auf Gewindebolzen ohne Endbund.

Aus Festigkeitsgründen erweist sich im Fall der zwei radial verlaufenden plastischen Gelenke eine axiale Erstreckung der Materialstege von etwa 0,5 mm bis etwa 3 mm von Vorteil. Bei diesen Wandstärken ist das Befestigungselement immer noch relativ einfach mit einem Hilfswerkzeug, beispielsweise mit einer Zange, zusammenpressbar. Andererseits weisen die plastischen Gelenke eine ausreichende Festigkeit auf, damit sie nicht bei der Herstellung, der Lagerung oder beim händischen Manipulieren aufbrechen.

Im Fall zweier radialer, plastischer Gelenke besteht auch die Möglichkeit, die Materialstege am ringförmigen Kragen vorzusehen. Bei dieser Ausführungsvariante sind für das Zusammenpressen der Hälften des Körpers verhältnismässig kleine Kräfte erforderlich.

Indem von beiden Flachseiten an den axialen Enden des Körpers im wesentlichen ringförmige Krägen abragen, welche die Ausnehmungen in den Hälften begrenzen, muss beim Aufschieben des Befestigungselements auf den Gewindebolzen nicht mehr auf die Orientierung geachtet werden. Die abragenden, ringförmigen Krägen dienen auch der Zentrierung des Bauteils gegenüber dem Gewindebolzen bzw. gegenüber dem Befestigungselement. An der Aussenseite eines oder beider ringförmigen Krägen können auch Gewindegänge vorgesehen sein, beispielsweise um noch weitere Elemente zentriert anzubinden oder um über eine zusätzliche formschlüssige Verbindung des Kragens mit Wandung des Bauteils die Haltekraft der Verbindung noch weiter zu erhöhen.

Für jeden ringförmigen Kragen erweist sich eine axiale Erstreckung von etwa 2 mm bis etwa 20 mm von Vorteil.

In einer Variante eines Befestigungselements mit zwei radial verlaufenden plastischen Gelenken sind die dünnen Materialstege an der dem Kragen abgewandten Flachseite des Körpers angeordnet. Bei dieser Variante der Erfindung, die sich besonders für Befestigungen mit grösseren Zuglasten eignet, ist die radiale Erstreckung der dünnen Materialstege zu beiden Seiten der Ausnehmung durch die radiale Erstreckung der ringförmig verlaufenden Stirnfläche festgelegt.

Während das erfindungsgemässe Befestigungselement im Prinzip auch aus Kunststoff bestehen kann, erweist es sich für die erzielbaren Lastwerte und aus Brandsicherheitsüberlegungen von Vorteil, wenn der Körper aus Metall besteht. Beispielsweise kann das Befestigungselement eine Gewindemutter aus Eisen, Stahl, Kupfer, Messing oder dergleichen sein. Das Befestigungselement kann auch ein Blechteil sein, das in der gewünschten Form ausgestanzt und gefaltet ist.

Im folgenden wird die Erfindung unter Bezugnahme auf in den Zeichnungen dargestellte Ausführungsbeispiele näher erläutert. Es zeigen:
- Fig. 1: eine perspektivische Darstellung eines ersten Ausführungsbeispiels des Befestigungselements;
- Fig. 2: eine Draufsicht des Befestigungselements aus Fig. 1 in zusammengedrücktem Zustand;
- Fig. 3: eine Seitenansicht des Befestigungselements aus Fig. 2;
- Fig. 4: das auf einen Gewindebolzen montierte Befestigungselement aus Fig. 1; und
- Fig. 5: zwei Zustände eines zweiten Ausführungsbeispiels eines auf einem Gewindebolzen montierten Befestigungselements.

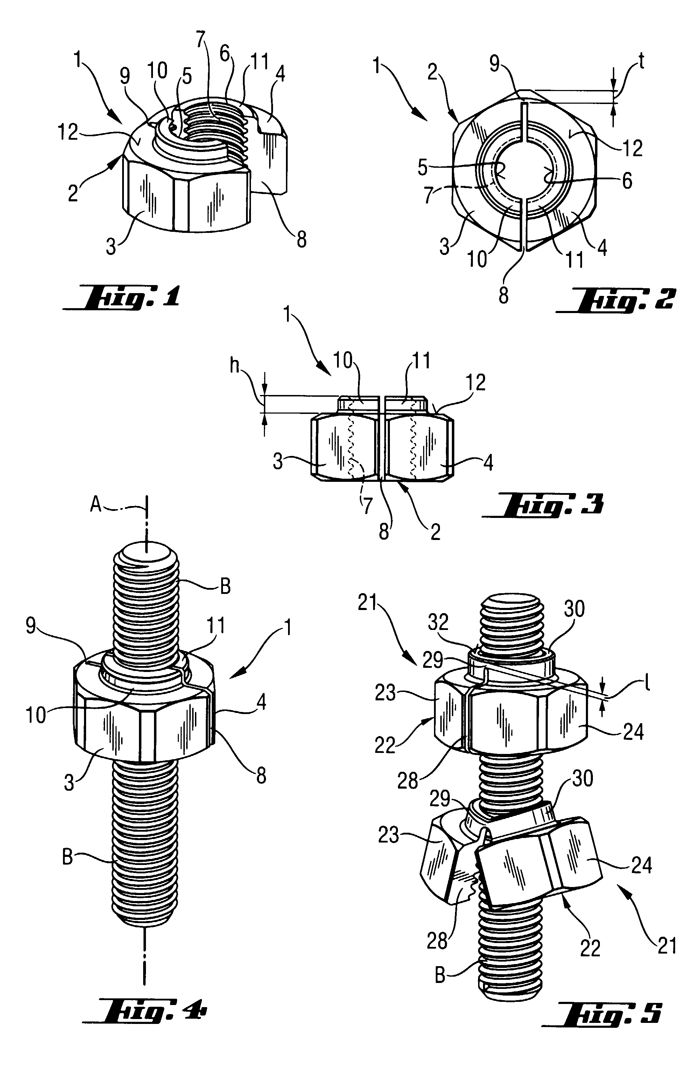

Das in den Fig. 1 - 3 dargestellte erste Ausführungsbeispiel des erfindungsgemässen Befestigungelements ist jeweils gesamthaft mit dem Bezugszeichen 1 versehen. Insbesondere handelt es sich dabei um eine Gewindemutter mit einem einstückigen, mit einem Aussensechskant versehenen Körper 2, der vorzugsweise aus einem Metall besteht. Der Körper 2 ist durch einen sich axial erstreckenden Schlitz 8 in zwei Hälften 3 und 4 geteilt, die über eine gelenkige Verbindung 9 miteinander verbunden sind. Jede der Hälften 3, 4 weist eine etwa halbkreisförmige Ausnehmung 5, 6 auf, die mit Gewindegängen 7 versehen ist. Der axial verlaufende Schlitz 8 verläuft entlang eines Durchmessers der Gewindemutter 1. Insbesondere ist der Schlitz 8 derart ausgebildet, dass er eine Seitenwand des Körpers 2 vollständig durchtrennt. Die auf der anderen Seite der Ausnehmung 5, 6 gegenüberliegende Seitenwand des Körpers 2 ist bis auf einen dünnen Materialsteg 9 radial geschlitzt. Der verbleibende dünne Materialsteg 9 bildet ein plastisches Gelenk. Die radiale Mindestwandstärke t beträgt etwa 0,5 mm bis etwa 3 mm. Der Schlitz 8 kann anfänglich ein Weite haben, die es erlaubt, die Gewindemutter 1 radial an einen Gewindebolzen anzusetzen. Von der Flachseite 12 an einem axialen Ende des Körpers 2 ragt ein im wesentlichen ringförmiger Kragen ab, der von Kragenhälften 10 und 11 gebildet ist, die die Ausnehmungen 5, 6 in den Hälften 3 und 4 beranden. Der ringförmige Kragen 10, 11 weist eine axiale Erstreckung h auf, die etwa 2 mm bis zu etwa 20 mm beträgt. Vorzugsweise sind auch die Kragenhälften 10, 11 mit Gewindegängen 7 ausgestattet.

Fig. 4 zeigt die Gewindemutter 1 aus den Fig. 1 - 3, nachdem sie auf einem Gewindebolzen B, der sich in Achsrichtung A erstreckt, montiert wurde. Die über das plastische Gelenk 9 verbundenen Hälften 3 und 4 sind im zusammengepressten Zustand dargestellt, in dem der Schlitz 4 die geringste Weite aufweist. In diesem Zustand sind die Gewindegänge in den Ausnehmungen der Hälften 3, 4 in Eingriff mit dem Aussengewinde des Gewindebolzens B. Der aus den Kragenhälften 10 und 11 bestehende ringförmige Kragen gelangt beim Festziehen der Mutter beispielsweise in eine korrespondierend weite Aufnahmebohrung eines Bauteils und dient zur Zentrierung und als Sicherung gegen ein unbeabsichtigtes Aufweiten der Hälften 3, 4 der Gewindemutter 1.

Fig. 5 zeigt ein zweites Ausführungsbeispiel einer Gewindemutter 21. Zur Erläuterung der Funktionsweise zeigt die Darstellung zwei Gewindemuttern 21, die auf einem Gewindebolzen B angeordnet sind. Die untere Gewindemutter 21 ist im Zustand vor dem Zusammenpressen ihrer Hälften 23, 24 dargestellt. Die obere Gewindemutter 21 ist im montierten Zustand gezeigt. Der Körper 22 der Gewindemutter 21 ist durch einen in axialer Richtung verlaufenden Schlitz 28 in zwei Hälften 23, 24 geteilt. Der Schlitz erstreckt sich über einen Durchmesser des Körpers 22 der Gewindemutter 21 und durchtrennt beide einander gegenüberliegenden Seitenwände des Körpers. In jeder der Seitenwände erstreckt sich der Schlitz 28 in axialer Richtung bis zu einem dünnen Materialsteg, der zu beiden Seiten der Ausnehmung ein plastisches Gelenk 29 bildet. Die axiale Erstreckung I der beiden plastischen Gelenke 29 beträgt etwa 0,5 mm bis etwa 3 mm. Von der Flachseite 32 des axialen Endes der Gewindemutter 21 erstreckt sich ein ringförmiger Kragen 30, der die Ausnehmungen in den Hälften 23, 24 berandet. Die plastischen Gelenke 29 sind beispielsweise im Bereich des umlaufenden Kragens 30 vorgesehen. Sie können aber auch von Materialstegen an dem dem Kragen 30 abgewandten axialen Ende des Körpers 22 gebildet sein. Es kann auch vorgesehen sein, dass von beiden Flachseiten des Befestigungselements ein ringförmiger Kragen abragt.

Die Erfindung ist am Beispiel von Gewindemuttern erläutert worden. Es versteht sich, dass das Befestigungselement auch ein Blechstanzbiegeteil sein kann, das in geeigneter Form ausgestanzt und durch Falten zu einem Befestigungselement geformt ist, das zwei, über wenigstens ein plastisches Gelenk miteinander verbundene Hälften aufweist, die mit im wesentlichen halbkreisförmigen Ausnehmungen mit Gewindegängen versehen sind.

## Patentansprüche

1. Befestigungselement für Gewindebolzen (B), insbesondere Gewindemutter (1; 21), mit einem, vorzugsweise mit einem Aussensechskant versehenen Körper (2; 22), der in zwei, gelenkig miteinander verbundene Hälften (3, 4; 23, 24) geteilt ist, die jeweils eine im wesentlichen halbkreisförmige Ausnehmung (5, 6) besitzen, welche wenigstens an ihrem Grund einen oder mehrere Gewindegänge (7) aufweist, dadurch gekennzeichnet, dass die gelenkige Verbindung der beiden Hälften (3, 4; 23, 24) von wenigstens einem plastischen Gelenk (9; 29) gebildet ist und von wenigstens einer Flachseite (12; 32) am axialen Ende des Körpers (2; 12) ein im wesentlichen ringförmiger Kragen (10, 11; 30) abragt.

2. Befestigungselement nach Anspruch 1, dadurch gekennzeichnet, dass der Körper (2) einstückig ausgebildet und entlang eines Durchmessers geschlitzt ist, wobei eine radiale Seite des Körpers (2) vollständig und die gegenüberliegende Seite bis auf einen dünnen, axial verlaufenden Materialsteg (9) durchtrennt ist, der das plastische Gelenk bildet.

3. Befestigungselement nach Anspruch 2, dadurch gekennzeichnet, dass der Materialsteg (9) eine radiale Mindestwandstärke (t) aufweist, die etwa 0,5 mm bis etwa 3 mm beträgt.

4. Befestigungselement nach Anspruch 1, dadurch gekennzeichet, dass der Körper (22) einstückig ausgebildet ist, und entlang eines Durchmessers derart axial geschlitzt ist, dass an einem axialen Ende des Körpers zwei einander gegenüberliegende, radial verlaufende Materialstege (29) verbleiben, welche zu beiden Seiten der Ausnehmung je ein plastisches Gelenk bilden.

5. Befestigungselement nach Anspruch 4, dadurch gekennzeichnet, dass die Materialstege (29) eine axiale Erstreckung (I) aufweisen, die etwa 0,5 mm bis etwa 3 mm beträgt.

6. Befestigungselement nach Anspruch 4 oder 5, dadurch gekennzeichnet, dass die Materialstege (29) am ringförmigen Kragen (30) vorgesehen sind.

7. Befestigungselement nach einem der vorangehenden Ansprüche, dadurch gekennzeichnet, dass von den beiden Flachseiten an den axialen Enden des Körpers im wesentlichen ringförmige Kragen abragen und die Ausnehmungen begrenzen.

8. Befestigungselement nach einem der vorangehenden Ansprüche, dadurch gekennzeichnet, dass die axiale Erstreckung des ringförmigen Kragens (10, 11; 30) von etwa 2 mm bis etwa 20 mm beträgt.

9. Befestigungselement nach Anspruch 4 oder 5, dadurch gekennzeichnet, dass die zwei radial verlaufenden Materialstege an der dem ringförmigen Kragen abgewandten Flachseite des Körpers angeordnet sind.

10. Befestigungselement nach einem der vorangehenden Ansprüche, dadurch gekennzeichnet, dass der Körper (2; 22) aus Metall besteht.
